Europäisches Patentamt

European Patent Office    (11) Publication number: **0 330 365**

Office européen des brevets    **A2**

(12)    **EUROPEAN PATENT APPLICATION**

(21) Application number: **89301429.0**

(51) Int. Cl.⁴: **C08J 9/22 , C08K 3/34**

(22) Date of filing: **15.02.89**

(30) Priority: **26.02.88 JP 42212/88**

(43) Date of publication of application:
**30.08.89 Bulletin 89/35**

(84) Designated Contracting States:
**BE DE ES FR GB IT NL SE**

(71) Applicant: **ARCO CHEMICAL TECHNOLOGY INC.**
**3 Christina Centre Suite 902 201 N Walnut Street**
**Wilmington Delaware 19801(US)**

(72) Inventor: **Yamaguchi, Takeshi**
**10-13, Mukojima 2-chome**
**Sumida-ku Tokyo-To(JP)**

(74) Representative: **Cropp, John Anthony David et al**
**MATHYS & SQUIRE 10 Fleet Street**
**London, EC4Y 1AY(GB)**

(54) **Pre-expanded plastic beads for controlling thermal shrinkage and pyrolytic rate of plastic foam.**

(57) Thermal shrinkage and decomposition rate of molded expandable resins of appropriate density are successfully controlled by adding a water-soluble silicate and or polysilicate during pre-expansion operation of the expandable resins.

EP 0 330 365 A2

# PRE-EXPANDED PLASTIC BEADS FOR CONTROLLING THERMAL SHRINKAGE AND PYROLYTIC RATE OF PLASTIC FOAM

## BACKGROUND OF THE INVENTION

This invention pertains to plastic foam beads in which, in the pre-expansion step of a process for producong expandable plastic molding which is used for the heat resistant pre-expanded plastic beads, a water-soluble silicate or polysilicate either alone or mixed is coated on to the surface of a pre-expanded plastic material of polymer particles such as polystyrene, styrene-methyl methacrylate copolymer, polypropylene, polymethyl methacrylate, polyphenylene oxide, polyethylene and polypropylene carbonate or a mixture of these polymer particles.

The preparation of spongy molded plastic of low density by heat forming expandable polystyrene particles is well known. This is used for insulating, cushioning or packaging and containers of juices, coffee and instant foods. Generally, in the process prior to the molding step the particles are pre-expanded under favorable conditions to very low density, and then are introduced into the cavity of a mold. When these pre-expanded particles are heated above the softening point, the respective particles expand again to fill the mold and fuse, and are then cooled and taken from the mold. A hydrocarbon such as butane, pentane and hexane or freon is impregnated for blowing and, by the sudden vaporization of these gases, the material is quickly expanded.

On the other hand, preventing lumping of the polystyrene particles during pre-expansion by coating the said styrene polymer with a small amount of hydrated calcium silicate is well known (U.S. 4,029,613).

Polystyrene has a softening point of approximately $100^\circ$ C and an ignition point of approximately $380^\circ$ C. In the vicinity of $100^\circ$ C, foam softening occurs and the material is molded by the melt adhesion process. Conversely, in the vicinity of $100^\circ$ C, it is also known that the molded part starts to shrink and the part begins to crumble. If the heat shrinkage resistance can be improved, the way would open for various new applications and this feature would also be valid for other above-mentioned plastics.

## BRIEF DESCRIPTION OF THE DRAWING

Figure 1 shows a test specimen for thermal shrinkage of molded expandable resins.
Figure 2 illustrates a test device of decomposition rate of molded expandable resins.

## DETAILED DESCRIPTION OF THE INVENTION

This invention was successfully developed as a result of experimental studies for resolving the above-mentioned problems. This invention is given in the claims but it is further described in detail taking polystyrene beads as the typical example.

With respect to the apparatus for pre-expanding the polystyrene beads, there are the type in which steam vapour comes in direct contact with the said beads and a system involving indirect heating. In the first type, the continuous process is mainly used and in the second type, the batch process is most frequently used with a steam jacket provided. This invention is applicable to either system and gives us uniform coating.

A molded part made of polystyrene beads coated with water-soluble silicate or polysilicate, either alone or a mixture, can be used around $100^\circ$ C without being shrunk at all. The foam density is dependent on temperature, time and pressure, and the usual range of specific weight differs in accordance with the target application, but in most cases this is 0.010-0.050 g/cc. By means of this foam density and the amount of the additive coated onto the surface, the thermal shrinkage and the rate of pyrolysis can be controlled.

It is important to quench pre-expanded beads immediately after pre-expansion in order to make the pre-expansion density more uniform and, for this purpose, a pre-expansion machine of the indirect heating, reduced pressure type was developed. Since this is a double steam-jacketed system and the inside of the vessel is under reduced pressure, adding a small amount of water immediately removes the latent heat by which the pre-expanded beads can be quickly cooled. This type of apparatus can enhance the effect of leading to a more uniform vaporization of the inside of the vessel so that coating also can be made more uniform. And even after molding is completed, in the boundary of the melt adhered particles, these salts are still uniformly dispersed.

For the water-soluble silicate or polysilicate used for coating, an amorphous silicic acid containing $Al_2O_3$, $CaO$, $Fe_2O_3$, $MgO$, $Na_2O$, $K_2O$, and 85% or more of $SiO_2$ is hydrated and used as an aqueous solution or a dried fine powder of 10-25% mixture containing $Al_2O_3$, $CaO$, $Fe_2O_3$, $MgO$, $K_2O$, $Na_2O$ and 70% or more of $SiO_2$ can be used. The use of dried powder or the aqueous solution is determined on the basis of the type of pre-expansion machine. It was found, that an amount of addition of 2.0% or more causes problems during molding.

In recent years the technique for making castings by burying a molded polystyrene foam having the same shape as that of the target casting in dry sand, pouring the alloy melt and replacing the polystyrene molded pattern has been developed and used for the preparation of various castings, but the drawback of not being able to control the rate of decomposition at high temperature is known. But in this invention, the gas pressure and decomposition rate of the decomposition at high temperature, where the said metal or metal alloy is molten, can be controlled so that this method can be applied to new casting technology.

Examples of the method for producing the plastic beads of this invention are described in the following sections in detail, but this invention is not limited to these patent examples and it is apparent that changes or modifications within the gist of this invention are also covered by this invention.


### EXAMPLE 1


Using the indirect heating type system (Kohler General Co.) of a reduced pressure double container construction, five levels of salt mixture (0.00, 0.05, 0.10, 0.15, and 0.20) of the said sodium or potassium silicate and calcium or aluminum polysilicate per 100 parts of the expandable polystyrene particles were pre-expanded to the lowest currently used density of about 0.017 g/cc in an aluminum alloy container provided with stirring vanes. The respective foam conditions were satisfactory as shown in Table 1.

TABLE 1

|   | Density g/cc | Silicate/Polysilicate Content, Dry Wt-% |
|---|---|---|
| A | 0.0168 | 0.00 |
| B | 0.0169 | 0.05 |
| C | 0.0169 | 0.10 |
| D | 0.0170 | 0.15 |
| E | 0.0170 | 0.20 |

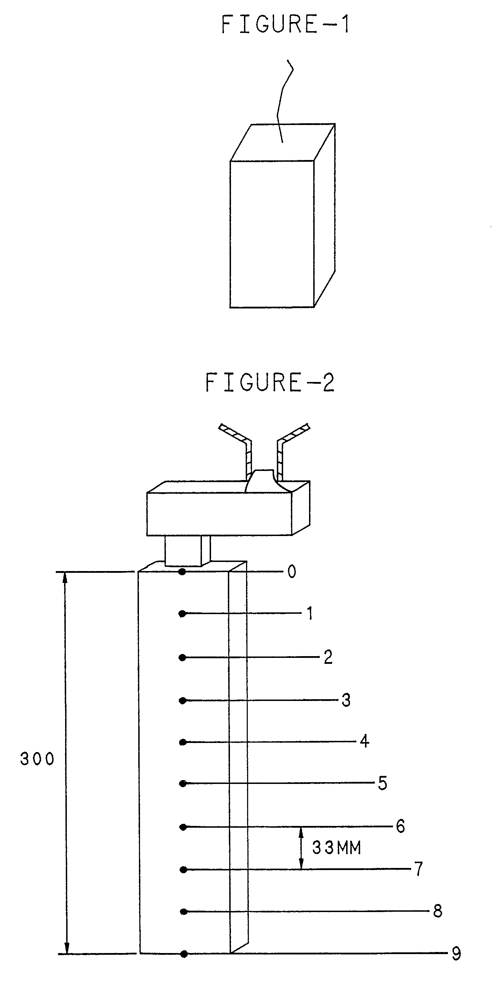

Because of some difference between the outside and inside density of these beads immediately after pre-expansion, a 430 x 430 x 50 mm board was molded in the foam polystyrene molding machine after a wait of approximately 3 hours and, in order to complete its natural shrinkage, it was allowed to stand for one week after which a piece for testing heat shrinkage having a size of 30 x 50 x 100 mm was prepared as shown in Figure 1. This was held for 90 seconds in a hot air tank controllable so far as possible to temperatures of approximately 100°C, 130°C and 160°C after which the volume shrinkage rate was measured and the results shown in Table 2.

TABLE 2

|   | Silicate/Polysilicate Content, dry wt-% | Volume Shrinkage Heated for 90 Sec. | | |
|---|---|---|---|---|
|   |   | 100-102°C | 128-130°C | 158-161°C |
| A | 0.00 | 3.90 | 9.81 | 81.86 |
| B | 0.05 | 1.78 | 3.22 | 74.81 |
| C | 0.10 | 0.66 | 2.81 | 66.26 |
| D | 0.15 | 0.21 | 2.77 | 55.91 |
| E | 0.20 | 0.20 | 2.46 | 43.84 |

The additions made in this manner clearly improved the thermal shrinkage resistance. Up to 100-105°C, approximately 0.030 g/cc improvement was realized in which the thermal shrinkage does not occur at all with an addition of about 0.50% at foam densities generally used for containers. So that this invention can be used for new applications.

## EXAMPLE 2

An extinction test piece measuring 30 x 50 x 300 mm was similarly prepared from the above-mentioned foam molding. After this was buried in dry silica sand (AFS-No. 25-55) as indicated in the Figure 2, vibrated and packed, aluminum alloy melt of 700°C was poured and, with 33 mm intervals from the initial measuring point provided, the extinction time was measured from No. 1 to No. 9 by means of the electronic microprocess sequence measuring unit. The results are shown in Table 3.

The polystyrene foam was decomposed and vaporized by the invading aluminum alloy and the time for replacement by the alloy melt was clearly delayed. The generated gas was easily dissipated into the silica sand embedding material and by the endothermic pyrolysis, cooling of the metal was accelerated. The condition for directional solidification became more prominent resulting in adequate fulfillment of the casting conditions. Simultaneously, the gas was adequately dispersed and gas pressure formed during melt substitution also decreased. This sand was silica sand which was vibrated at frequency of 1500-7500 cycles and formed into a sand filling within approximately 3 minutes.

### TABLE 3

|   | 1 | 2 | 3 | 4 | 5 | 6 | 7 | 8 | 9 | total |
|---|---|---|---|---|---|---|---|---|---|-------|
| A | 0.40 | 0.76 | 1.20 | 1.56 | 1.98 | 2.38 | 2.66 | 3.02 | 3.40 | 17.36 |
| B | 0.44 | 0.88 | 1.28 | 1.70 | 2.16 | 2.53 | 2.92 | 3.26 | 3.72 | 18.89 |
| C | 0.60 | 1.02 | 1.46 | 1.88 | 2.30 | 2.82 | 3.26 | 3.72 | 4.10 | 21.16 |
| D | 0.64 | 1.08 | 1.64 | 2.12 | 2.66 | 3.12 | 3.64 | 4.05 | 4.50 | 23.45 |
| E | 0.66 | 1.20 | 1.72 | 2.18 | 2.68 | 3.26 | 3.90 | 4.32 | 4.90 | 24.82 |

Rate of extinction substitution (seconds), JIS aluminum alloy AC-48, pour temperature 700°C, sample size 30x50x300 mm sprue system(Fig.2 as shown), each interval 33 mm from start point 1 to No. 9.

## EXAMPLE 3

As shown in Figure 2 of the same above-mentioned patent example, a casting melt of approximately 1350°C (CE = 4.29, C = 3.66, Si = 1.85) was poured and the results of measurements are shown in Table 4. The pressure of the generated gas could be minimized, and the formed gas adequately scattered and gas defects are decreased and, along with satisfactory substitution by the cast iron melt, because the rate of decomposition could be slowed.

TABLE 4

|   | 1 | 2 | 3 | 4 | 5 | 6 | 7 | 8 | 9 | Total |
|---|---|---|---|---|---|---|---|---|---|-------|
| A | 0.32 | 0.32 | 0.38 | 0.52 | 0.54 | 0.72 | 0.76 | 0.78 | 0.88 | 5.22 |
| B | 0.24 | 0.38 | 0.48 | 0.56 | 0.64 | 0.76 | 0.86 | 0.94 | 0.98 | 5.84 |
| C | 0.20 | 0.38 | 0.52 | 0.54 | 0.64 | 0.80 | 0.86 | 0.94 | 1.18 | 6.06 |
| D | 0.30 | 0.50 | 0.60 | 0.72 | 0.88 | 1.10 | 1.16 | 1.26 | 1.28 | 7.80 |
| E | 0.30 | 0.36 | 0.58 | 0.56 | 0.69 | 0.85 | 0.96 | 1.06 | 1.24 | 6.60 |

Rate of extinction substitution (sec.), FC-20 casting (CE = 4.29, C = 3.66, Si = 1.85), sample size 30x50x300 mm, sprue system (Fig.2 as shown), each interval 33 mm from start point 1 to No. 9)

## EXAMPLE 4

Water-soluble polysilicates were applies to expandable polypropylene beads, as described in previous examples, at 0.0, 0.05, 0.10, 0.15, and 0.20 wt-%.

Thermal shrinkage and decomposition rate of molded polypropylene parts were successfully controlled, as in the case of polystyrene.

## EXAMPLE 5

Similar results were obtained, also for expandable polymethyl methacrylate, impregnated with fluorocarbon.

## Claims

1. Pre-expanded plastic beads for controlling thermal shrinkage and pyrolytic rate of plastic foam moldings characterised in that said beads contain on the surface thereof a water-soluble silicate or polysilicate coating amounting to from 0.05% to 2.0% of the weight of said beads.

2. Pre-expanded plastic beads as claimed in claim 1 in which the water-soluble silicate or polysilicate is a salt of alkali metal or alkaline earth metal.

3. Pre-expanded plastic beads as claimed in claim 1 or claim 2 in which the said pre-expanded plastic beads are polymer particles of polystyrene, copolymer of styrene and methyl methacrylate, polypropylene, polymethyl methacrylate, polyphenylene oxide, polyethylene or polypropylene carbonate or a mixture of these polymer particles.

4. A process for casting metal moldings by burying plastic molds in silica sand and pouring molten metal into the mold to replace the plastic by the metal, characterised in that the plastic molds are formed from coated pre-expanded plastic beads as claimed in any one of claims 1 to 3.

# FIGURE-1

# FIGURE-2